# EUROPEAN PATENT SPECIFICATION

(11) **EP 3 026 850 B1**
(45) Date of publication and mention of the grant of the patent: **31.07.2019**
(21) Application number: 14797496.8
(22) Date of filing: 12.05.2014
(51) Int. Cl.: H04L 12/715, H04L 12/64, H04L 12/24, H04L 12/721

(54) **METHOD FOR PROCESSING MULTI-ZONE PATH COMPUTATION FAILURE AND PATH COMPUTATION ELEMENT (PCE)**
VERFAHREN ZUR VERARBEITUNG VON MEHRZONEN-PFADBERECHNUNGSFEHLERN UND PFADBERECHNUNGSELEMENTEN
PROCÉDÉ DE TRAITEMENT D'ÉCHEC DE CALCUL DE TRAJET MULTIZONES ET ÉLÉMENT DE CALCUL DE TRAJET (PCE)

(30) Priority: 25.07.2013 CN 201310316335
(43) Date of publication of application: 01.06.2016
(73) Proprietor: ZTE Corporation, Shenzhen, Guangdong 518057 (CN)
(72) Inventor: LU, Gang, Shenzhen Guangdong 518057 (CN); CAO, Xuping, Shenzhen Guangdong 518057 (CN)
(74) Representative: Mozzi, Matteo
(86) International application number: PCT/CN2014/077313
(87) International publication number: WO 2014/183628

(56) References cited:
- EP-A1- 1 845 640
- EP-A1- 1 942 616
- EP-A1- 2 228 949
- WO-A1-2013/041028
- CN-A- 101 001 170
- CN-A- 101 686 197
- CN-A- 102 065 006
- CN-A- 102 469 009
- DE-A1-102005 025 420
- US-A1- 2011 229 123

## Description

### Technical Field

The disclosure relates to a path calculation technology, and in particular to a method and a system for processing a failure of a multi-domain path computation.

### Background

In a multi-layer multi-domain network based on GMPLS protocols, each node may be divided into a different domain (or layer) according to the switching capacity and speed thereof. In a multi-domain network classified by Autonomous System (AS), each domain is equipped with a corresponding Path Computation Element (PCE) for computing an inter-domain path. Different domains as well as the access position and the exit position of the same domain are connected via nodes, and a specific node-to-node path calculated by a PCE is called a link.

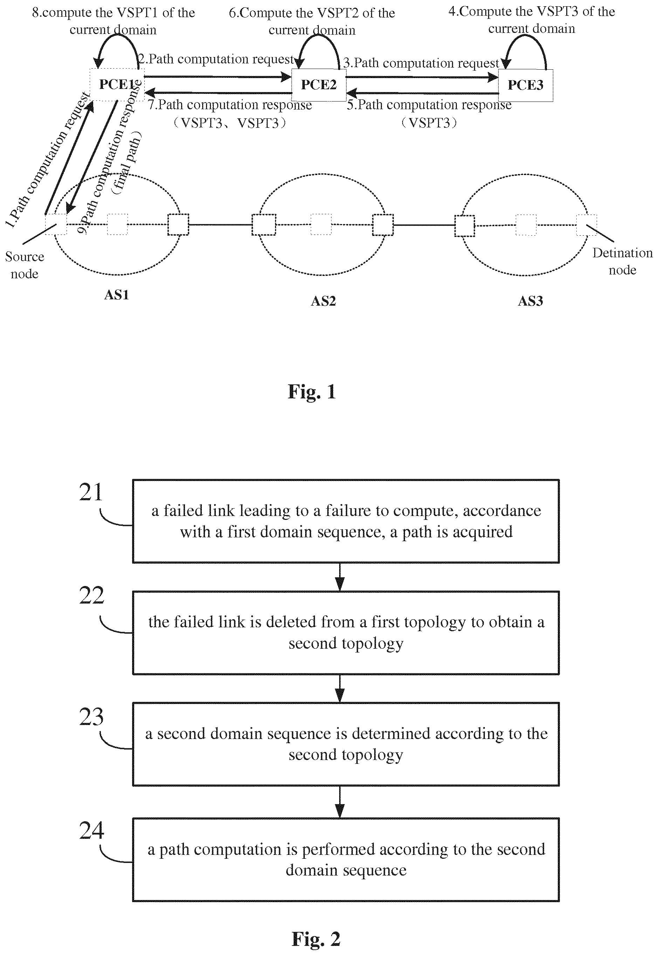

In existing path computation field, a Backward Recursive PCE-based Computation (BRPC) is provided in RFC 5441. As shown in Fig. 1, after a source node and a destination node are specified, the PCE of a head domain selects, according to a topology, a rough path consisting of domains (namely, a domain sequence: AS1-AS2-AS3) and then sends a path computation request PCReq to the PCEs of an AS2 and an AS3 according to the domain sequence. After receiving the PCReq, the PCE of a rear domain starts computing all the paths (that is, a Virtual Shortest Path Tree (VSPT)) that may locate between the destination node and a rear domain boundary entrance node and sends a PCRep (path computation response) containing the VSPT of the rear domain to an upstream PCE2 in a sequence reverse to the domain sequence; and after receiving the PCRep, the PCE2 starts a computation to generate the VSPT of the AS2, adds the VSPT of the AS2 in the PCReq and then forwards the PCReq to an upstream PCE1 until the PCE1 of the domain in which the source node locates confirms the VSPT of the AS1, determines all the specific paths between the source node and the destination node and finally selects an optimal path from the specific paths.

At present, the BRPC-based cross-domain path computation may fail in practice, and according to the position where a failure occurs, there are at least four failure
scenarios: 1) the computation failure in the PCE3 of the rear domain; 2) the computation failure in the PCE2 of an intermediate domain; 3) the computation failure in the PCE1 of the head domain; and 4) a failure occurring between two adjacent domains. Although it has been defined in RFC 5440 that a PCRep failure response may carry a NO-PATH object to indicate a computation failure in the case of a failed path computation, an IRO object to record the nodes or links or domains that must be included in a path, an XRO object to record computation-excluded nodes or links or domains and a METRIC object to record information such as a standard for the determination of an optimal path to the destination, no practical method has been provided for a PCE to process a BRPC failure, for example, no practical method has been provided for the PCE of the head domain to compute a new path bypassing a failed topological area after a computation failure.

EP 2228949 A1 discloses a method for obtaining a path, a path computation element (PCE), and a path computation system.

US 2011/0229123 A1 discloses a cross-domain parallel recovering method and system in multi-layer and multi-domain distributed optical network.

### Summary

The technical problem the disclosure aims to address is to provide a method for processing a failure of a multi-domain path computation and a path computation element PCE to compute a new path after the computation of a multi-domain path is failed.

To address the foregoing technical problem, the disclosure provides a method for the PCE of a head domain to process a failure of a multi-domain path computation, according to claim 1.

In the method, the failed link is a failed link of a downstream PCE or a failed link of the head domain.

In the method, the failed link of the downstream PCE is obtained by being transmitted by the downstream PCE and that of the head domain is obtained by being computed by the PCE of the head domain.

In the method, determining the second domain sequence according to the second topology includes:
determining, according to the second topology, available candidate domain
sequences form a source node to a destination node;
determining a position where the failed link locates;
based on that the failed link locates in an intermediate domain, excluding a domain sequence including the intermediate domain where the failed link locates from the candidate domain sequences and then selecting the shortest one of the rest candidate domain sequences as the second domain sequence; directly selecting the shortest one of the candidate domain sequences as the second domain sequence based on that each of the candidate domain sequences is a domain sequence including the intermediate domain; or
selecting the shortest one of the candidate domain sequences as the second domain sequence based on that the failed link locates in the head domain or a rear domain or between two adjacent domains.

The method further includes:
based on that the PCE of the head domain fails to calculate the path according to the first domain sequence, transmitting a first notification message to a downstream PCE according to the first domain sequence to notify the downstream PCE receiving the notification message to release resources occupied for path computation.

In the method, computing the path according to the second domain sequence comprises:
sending, according to the second domain sequence, a path computation request, which is used for requesting to compute a path according to the second domain sequence, to the downstream PCE, wherein the failed link is contained in the path computation request to enable the downstream PCE to exclude the failed link according to the path computation request when the downstream PCE calculates the path for the second domain sequence.

To address the foregoing technical problem, the disclosure also provides a method, which is applied to a PCE of an intermediate domain, for processing a failure of a multi-domain path computation, including:
after the PCE of the intermediate domain fails to compute a path according to a first domain sequence, transmitting a failed link leading to a failure to compute the path to a PCE of a head domain according to the first domain sequence.

In the method, based on that the PCE of the intermediate domain fails to compute the path according to the first domain sequence, the method further includes:
transmitting a notification message to a downstream PCE according to the first domain sequence to notify the downstream PCE receiving the notification message to release the resources occupied for path computation.

The method further includes:
receiving a path computation request, which is sent from the PCE of a head domain and is used for requesting to compute, according to a second domain sequence, a path, wherein the failed link is contained in the path computation request; and
excluding the failed link contained in the path computation request when computing the path according to the second domain sequence.

The disclosure also provides a method, which is applied to a PCE of a rear domain, for processing a failure of a multi-domain path computation, including:
based on that the PCE of the rear domain fails to compute a path according to a first domain sequence, transmitting a failed link leading to a failure to compute the path to an upstream PCE according to the first domain sequence.

The method further includes:
receiving a path computation request, which is sent from the PCE of a head domain and is used for requesting to compute, according to a second domain sequence, the path, wherein the failed link is contained in the path computation request; and
excluding the failed link contained in the path computation request when a path is computed according to the second domain sequence.

The disclosure further provides a PCE of a head domain, according to independent claim 6.

The failed links include:
a failed link of a downstream PCE or a failed link of the PCE of the head domain, wherein the failed link of the downstream PCE is obtained by being transmitted by the downstream PCE and the failed link of the head domain is obtained by being computed by the PCE of the head domain.

In the PCE, the domain sequence determination element comprises:
a first determination sub-element configured to determine, according to the second topology, available candidate domain sequences from a source node to a destination node;
a second determination sub-element configured to determine a position where the failed link locates;
a first selection sub-element configured to
based on the failed link locates in an intermediate domain, exclude a domain sequence including the intermediate domain where the failed link locates from the candidate domain sequences and then select the shortest one of the rest candidate domain sequences as the second domain sequence;
based on that each candidate domain sequence is a domain sequence including the intermediate domain where the failed link locates, directly select the shortest one of the candidate domain sequences as the second domain sequence; and
a second selection sub-element configured to select the shortest one of the candidate domain sequences as the second domain sequence based on that the failed link locates in the head domain, a rear domain or between two adjacent domains.

The solution provided herein has the following advantages:
according to the solution disclosed herein, if a PCE is disenabled by a link in computing a path from a source node to a destination node according to a first domain sequence, then the link leading to the failure of the computation is deleted from the topology of the PCE of a head domain to obtain a second topology, then a second domain sequence is generated according to the second topology and a path computation is carried out according to the second domain sequence, thereby determining a final path from a source node to a destination node.

### Brief Description of the Drawings

Fig. 1 is a schematic diagram illustrating an BRPC method according to the related art;
Fig. 2 is a schematic diagram illustrating a method, which is applied to a PCE of a head domain, for processing a failure of a multi-domain path computation according to an embodiment of disclosure;
Fig. 3 is a schematic diagram illustrating a method, which is applied to a PCE of an intermediate domain, for processing a failure of a multi-domain path computation according to an embodiment of disclosure;
Fig. 4 is a schematic diagram illustrating a method, which is applied to a PCE of a rear domain, for processing a failure of a multi-domain path computation according to an embodiment of disclosure;
Fig. 5 to Fig. 9 are schematic diagrams separately illustrating a multi-domain path computation respectively when a failed link locates at a different position according to an embodiment of disclosure;
Fig. 10 is a schematic diagram illustrating a structure of a PCE for a head domain according to an embodiment of disclosure;
Fig. 11 is a schematic diagram illustrating a structure of a PCE for an intermediate domain according to an embodiment of disclosure; and
Fig. 12 is a schematic diagram illustrating a structure of a PCE for a rear domain according to an embodiment of disclosure.

### Detailed Description of the Embodiments

To set forth the technical problem to be addressed by the disclosure and the technical solution and advantages of the disclosure more clearly, the disclosure is described below in detail with reference to specific embodiments when read in conjunction with accompanying drawings.

As shown in Fig. 2, a method for processing a failure of a multi-domain path computation, which involves a plurality of PCEs capable of computing a path from a source node to a destination node based on a BRPC method. The method includes the following blocks.
In block 21: a failed link leading to a failure to compute, accordance with a first domain sequence, a path is acquired.
In block 22: the failed link is deleted from a first topology to obtain a second topology;
In block 23: a second domain sequence is determined according to the second topology;
In block 24: a path computation is performed according to the second domain sequence.

In the method, if a PCE fails to compute the path according to the first domain sequence, then a computation based on a second domain sequence is initiated. As the second domain sequence is determined according to the second topology, the failed link may be avoided to guarantee the probability of success of the new path computation.

Specifically, in the foregoing embodiment, the failed link is a failed link of a downstream PCE or a failed link of the PCE of a head domain, wherein the failed link of the downstream PCE is obtained by being transmitted by the downstream PCE and that the failed link of the head domain is obtained by being computed by the PCE of the head domain.

In the related path computation field, each domain is equipped with a corresponding PCE. The process of a successful multi-domain path computation is substantially as follows: the PCE of a rear domain computes a path first; after successfully computing the path which the PCE of the rear domain is responsible for, the PCE of the rear domain sends a path computation response to an adjacent upstream PCE; after receiving the path computation response, the adjacent upstream PCE starts computing a path the adjacent upstream PCE is responsible for, so on and so forth, until the PCE of the head domain successfully computes the path. A PCE failing to compute a path notifies an upstream PCE of the result of the computation through a path computation response so that the upstream PCE abandons a path computation job scheduled to be executed, thus, in the embodiment, the failed link is either from the PCE of the head domain or from a downstream PCE. The failed link of the downstream PCE is provided by the downstream PCE and that of the head domain is directly calculated by the PCE of the head domain.

In the foregoing embodiment, block 23 specifically includes the following blocks.
In block 231: according to the new topology, available candidate domain sequences between the source node and the destination node are determined.
In block 232: a faulted domain including a failed link is determined.
In block 233: if the failed link locates in an intermediate domain, the domain sequence including the intermediate domain, which contain the failed link, is excluded from the candidate domain sequences and then the shortest one of the rest candidate domain sequences is selected as the second domain sequence; if each candidate domain sequence is a domain sequence including the intermediate domain which contain the failed link, the shortest one of the candidate domain sequences is selected directly as the second domain sequence.
In block 234: the shortest one of the candidate domain sequences is selected as the second domain sequence if the failed link locates in the head domain, the rear domain or between two adjacent domains.

Generally, the source node may be connected with the destination node through a plurality of candidate domain sequences. If the failed link is in the intermediate domain, due to inherent unstable factors of the intermediate domain which may be highly likely to cause a new failed link in the next path computation, the one of the candidate domain sequences which may avoid the intermediate domain is preferably selected as the second domain sequence to increase the probability of success of the next path computation; if the intermediate domain is unavoidable, then the shortest one of the candidate domain sequences is directly selected as the second domain sequence to guarantee the efficiency of the next path computation. As the head domain in which the source node locates and the rear domain in which the destination node locates are irreplaceable in a domain sequence, the shortest one of the candidate domain sequences is directly selected as the second domain sequence. Moreover, if the failed link is between two adjacent domains, as there may be other available inter-domain links between the two adjacent domains, the shortest one of the candidate domain sequences avoiding the failed link is directly selected as the second domain sequence.

Additionally, to support certain subsequent functions, the resources occupied for the path computation are not released by the current PCE immediately. It can be known from the above that in a case where the PCE of the head domain fails to compute a path, the computation of the path from the source node to the destination node is meaningless even if each downstream PCE successfully computes a path that the downstream PCE is responsible for. To avoid the waste of resources by the downstream PCE, in the foregoing embodiment, the method further includes the following block 25.

In block 25: if the PCE of the head domain fails to compute a path according to the first domain sequence, then a first notification message is transmitted to a downstream PCE according to the first domain sequence to notify the downstream PCE receiving the notification message to release the resources occupied for path computation.

In addition, although the second domain sequence may successfully avoid the failed link included in the first domain sequence, the downstream PCE may still waste resources in computing the failed link which is in the domain to which the downstream PCE belongs, when computing a path according to the second domain sequence, thus, in the foregoing embodiment, block 24 further includes the following:
a path computation request is sent to a downstream PCE according to the second domain sequence to request to compute according to the second domain sequence, a path, wherein the failed link is contained in the path computation request so that the downstream PCE may exclude the failed link according to the path computation request when computing the path according to the second domain sequence.

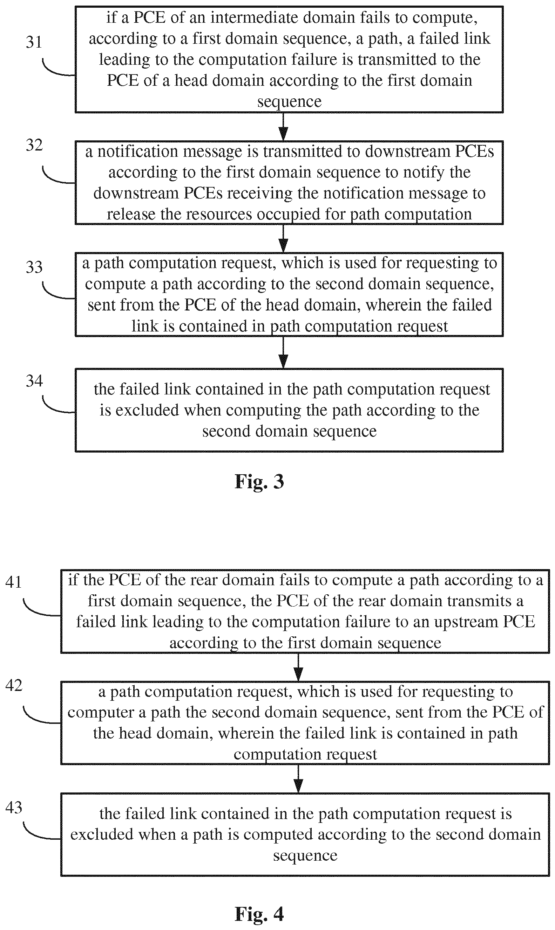

Further, as shown in Fig. 3, the embodiment of the disclosure further provides a method, which is applied to the PCE of an intermediate domain, for process a failure of a multi-domain path computation. The method includes the following blocks.

In block 31: if a PCE of an intermediate domain fails to compute, according to a first domain sequence, a path, a failed link leading to the computation failure is transmitted to the PCE of a head domain according to the first domain sequence.

In this way, the PCE of the head domain deletes the failed link in the intermediate domain from the first topology to obtain the second topology, a second domain sequence is determined according to the second topology, and finally a path computation is initiated according to the second domain sequence.

Additionally, to support certain subsequent functions, the resources occupied for the path computation are not released by the current PCE immediately after the path is successfully computed. It can be known from the above that if the PCE of the intermediate domain fails to compute a path, the computation of a whole end-to-end path is meaningless even if each downstream PCE successfully computes a path that the downstream PCE is responsible for. To avoid the waste of resources by the downstream PCE, as shown in Fig. 3, in the foregoing embodiment, the method further includes the following blocks.

In block 32: a notification message is transmitted to downstream PCEs according to the first domain sequence to notify the downstream PCEs receiving the notification message to release the resources occupied for path computation.

Further, to avoid the repeated computation of the failed link during the path computation for the second domain sequence, as shown in Fig. 3, the method may further include the following blocks.

In block 33: a path computation request, which is used for requesting to compute a path according to the second domain sequence, sent from the PCE of the head domain, wherein the failed link is contained in path computation request.

In block 34: the failed link contained in the path computation request is excluded when computing the path according to the second domain sequence.

Further, as shown in Fig. 4, the disclosure further provides a method, which is applied to a PCE of a rear domain, for processing a failure of a multi-domain path computation. The method includes the following blocks.

In block 41: if the PCE of the rear domain fails to compute a path according to a first domain sequence, the PCE of the rear domain transmits a failed link leading to the computation failure to an upstream PCE according to the first domain sequence.

In this way, the PCE of the head domain deletes the failed link locating in the rear domain from a first topology to obtain a second topology, determines a second domain sequence according to the second topology and finally initiates a path computation aiming at the second domain sequence.

Further, to avoid the repeated computation of the failed link during the path computation for the second domain sequence, as shown in Fig. 4, the method may further include the following blocks.
In block 42: a path computation request, which is used for requesting to computer a path the second domain sequence, sent from the PCE of the head domain, wherein the failed link is contained in path computation request; and
In block 43: the failed link contained in the path computation request is excluded when a path is computed according to the second domain sequence.

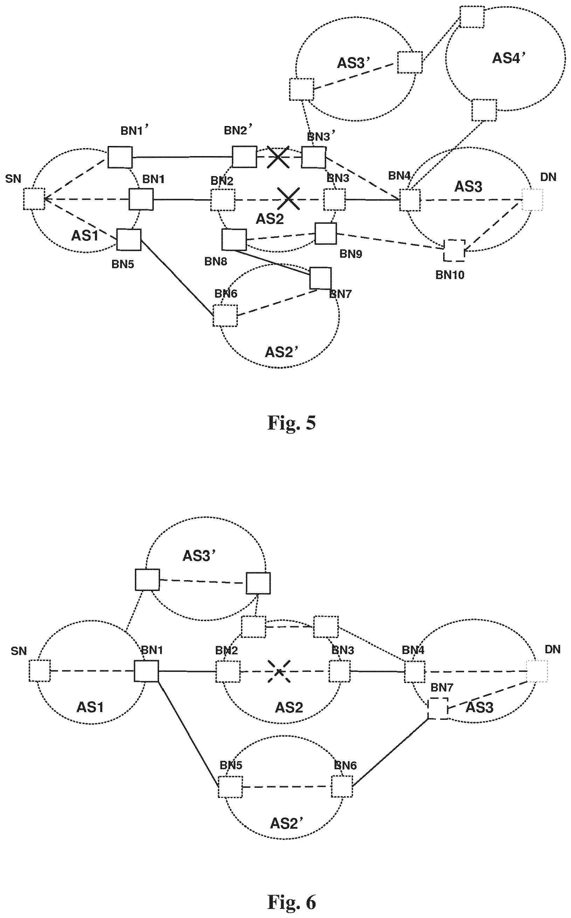

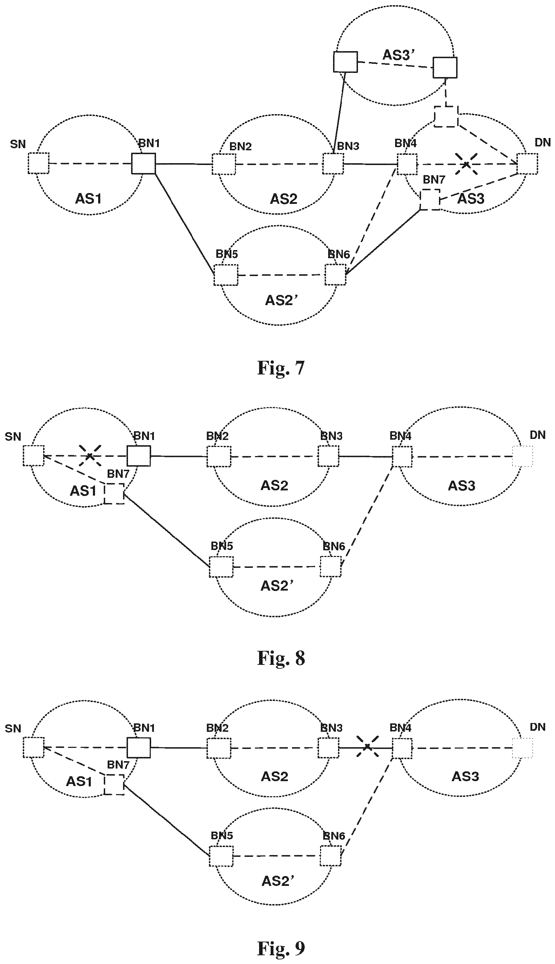

The practical application of the methods, which is applied to the PCE of a head domain, an intermediate domain or a rear domain respectively, for processing a failure of a multi-domain path computation are described below in detail.
I, There is a failed link in an intermediate domain
   (1) The second domain sequence may successfully avoid the intermediate domain
      As shown in Fig. 5, there are six domains (a head domain AS1, intermediate domains AS2, AS2', AS3' and AS4' and a rear domain AS3), PCEs corresponding to the domains consist of a PCE1 of the head domain, a PCE2 of an intermediate domain, a PCE3 of an intermediate domain, a PCE3' of an intermediate domain, a PCE4' of an intermediate domain and a PCE4 of the rear domain (not shown in accompanying drawings). A source node is represented by SN, a destination node is represented by DN, and boundary nodes are represented by BN1...BN10 and BN1' ....BN3'. Theoretically, the SN may be connected with the DN according to a domain sequence AS1-AS2-AS3 through a specific link BN1-BN2-BN3-BN4-DN or BN1'-BN2'-BN3'-BN4-DN or according to a domain sequence AS1-AS2'-AS2-AS3 through a specific link BN5-BN6-BN7-BN8-BN9-BN10-DN or according to a domain sequence AS1-AS2-AS3'-AS4'-AS3. If each link (the inter-domain link represented by a solid line in accompanying drawings) between two adjacent domains is normal, then the method which includes no inter-domain path computation mainly includes the followings blocks.
      In block 501: the SN sends a path computation request PCReq to the PCE1, and a cross-domain path from the SN to the DN is computed.
      In block 502: after receiving the path computation request PCReq, the PCE1 calculates the shortest domain sequence AS1-AS2-AS3 according to the first topology thereof, sets the IRO of the PCReq to be AS1, AS2 and AS3 and then forwards the PCReq to the PCE2.
      In block 503: the PCE2 forwards the PCReq to the PCE3.
      In block 504: after receiving the PCReq, the PCE3 serving as the PCE of the rear domain performs a BRPC to obtain successfully a VSPT3 (that is, BN4-DN).
      In block 505: the PCE3 initiates a path computation response PCRep, records the VSPT3 in the PCRep and then sends the PCRep to the PCE2.
      In block 506: after receiving the PCRep, the PCE2 performs a BRPC but fails as links BN2-BN3 and BN2'-BN3' are both unavailable.
      In block 507: the PCE2 sends a notification message PCNtf to the PCE3 to notify the PCE3 to release the resources occupied for computing the VSPT3;
      In block 508: the PCE2 records the failed links (that is, the links BN2-BN3 and BN2'-BN3') in the IRO of the PCRep, sets the NO-PATH object included in the PCReq to indicate the failure of the path computation and finally transmits the PCRep to the PCE1.
      In block 509: the PCE1 knows, according to the NO-PTH object included in the PCReq, that the path computation of the downstream PCE is failed, abandons the path computation to be performed, obtains the failed links BN2-BN3 and BN2'-BN3' from the IRO included in the RCPep and deletes the failed links BN2-BN3 and BN2'-BN3' from the first topology thereof to obtain a second topology.
      In block 510: the PCE1 determines candidate domain sequences AS1-AS2'-AS2-AS3 and AS1-AS2-AS3'-AS4'-AS3 according to the second topology thereof, finds that AS2 cannot be excluded from the domain sequences and therefore selects the shortest domain sequence AS1-AS2'-AS2-AS3 from the candidate domain sequences as a second domain sequence and initiates a path computation aiming at AS1-AS2'-AS2-AS3.
      In block 511: the PCE1 sets the IRO of the PCReq to beAS1-AS2'-AS2-AS3 and sends the PCReq to the PCE2'.
      In block 512: the PCE2' forwards the PCReq to the PCE2.
      In block 513: the PCE2 forwards the PCReq to the PCE3.
      In block 514: the PCE3 serving as the PCE of the rear domain carries out a path computation to obtain a new VSPT3 (BN10-DN).
      In block 515: the PCE3 records the new VSPT3 in the PCRep and then forwards the PCRep to the PCE2.
      In block 516: after receiving the PCRep, the PCE2 carries out a path computation to obtain a VSPT2 (BN8-BN9) successfully.
      In block 517: the PCE2 also records the VSPT2 in the PCRep and transmits the PCRep carrying the VSPT2 and the VSPT3 to the PCE2'.
      In block 518: after receiving the PCRep, the PCE2' carries out a path computation to obtain a VSPT2' (BN6-BN7).
      In block 519: the PCE2' records the VSPT2' in the VSPT3 and returns the PCRep carrying the VSPT2', the VSPT2 and the VSPT3 to the PCE1.
      In block 520: after receiving the PCRep, the PCE1 completes the path computation of the head domain to obtain a VSPT1 (SN-BN5) and determines a path from the SN to the DN according to the VSPT1, the VSPT2, the VSPT2' and VSPT3.
      In block 521: the PCE1 transmits the PCRep (carrying the path from the SN to the DN) to the SN node.
   (2) The second domain sequence can successfully avoid the intermediate domain
      As shown in Fig. 6, there are five domains (a head domain AS1, intermediate domains AS2, AS2' and AS3' and a rear domain AS3), the PCEs corresponding to the domains consist of a PCE1, a PCE2, a PCE3, a PCE2' and a PCE3' (not shown in accompanying drawings). A source node is represented by SN, a destination node is represented by DN, and boundary nodes are represented by BN1...BN7. If each link (the inter-domain link represented by a solid line in accompanying drawings) between two adjacent domains is normal, then the method which includes no inter-domain path computation mainly includes the following blocks.
      In block 601: the SN sends a PCReq to the PCE1 to calculate a cross-domain path from the SN to the DN.
      In block 602: after receiving the PCReq, the PCE1 calculates a first domain sequence AS1-AS2-AS3 according to a first topology, sets the IRO of the PCReq to be AS1, AS2 and AS3, and forwards the PCReq to the PCE2.
      In block 603: the PCE2 forwards the PCReq to the PCE3.
      In block 604: after receiving the PCReq, the PCE3 serving as the PCE of the rear domain first carries out a path computation to obtain a VSPT3 (BN7-DN) successfully.
      In block 605: the PCE3 records the VSPT3 in a PCRep and then forwards the PCRep to the PCE2.
      In block 606: after receiving the PCRep, the PCE2 carries out a path computation but fails as the link BN2-BN3 is unavailable.
      In block 607: the PCE2 sends a PCNtf to the PCE3 to notify the PCE3 to release the resources occupied for computing the VSPT3.
      In block 608: the PCE2 records the failed link BN2-BN3 in the IRO object of the PCRep, sets the NO-PATH object included in the PCRep to indicate the failure of the path computation and finally transmits the PCRep to the PCE1.
      In block 609: after receiving the PCRep, the PCE1 knows, according to the NO-PTH object included in the PCRep, that the path computation of the downstream PCE is failed, abandons the path computation to be performed, obtains the failed link BN2-BN3 from the IRO of the PCRep and deletes the failed link BN2-BN3 from the first topology thereof to obtain a second topology.
      In block 610: the PCE1 determines, according to the second topology thereof, a sole candidate domain sequence AS1-AS2'-AS3 as a second domain sequence and initiates a path computation aiming at the candidate domain sequence AS1-AS2'-AS3.
      In block 611: the PCE1 sets the IRO of the PCReq to be AS1-AS2'-AS3 and sends the PCReq to the PCE2'.
      In block 612: the PCE2' forwards the PCReq to the PCE3.
      In block 613: after receiving the PCReq, the PCE3 carries out a path computation to obtain a new VSPT3.
      In block 613: the PCE3 initiates a PCRep and forwards the PCRep carrying the VSPT3 to the PCE2'.
      In block 614: after receiving the PCRep, the AS2' carries out a path computation to obtain a new VSPT2' successfully.
      In block 615: the PCE2' records the VSPT2' in the PCRep and returns the PCRep carrying the VSPT2' and the VSPT3 to the PCE1.
      In block 616: after receiving the PCRep, the PCE1 completes the path computation of the head domain to obtain a VSPT1 and determines a path from the SN to the DN according to the VSPT1, the VSPT2' and VSPT3; and
      In block 617: the PCE1 records the path from the SN to the DN in the PCRep and then sends the PCRep to the SN node.
II. There is a failed link in a rear domain
   As shown in Fig. 7, there are five domains (a head domain AS1, intermediate domains AS2, AS2' and AS3' and a rear domain AS3), the PCEs corresponding to the domains consist of a PCE1, a PCE2, a PCE2', a PCE3' and a PCE3 (not shown in accompanying drawings). A source node is represented by SN, a destination node is represented by DN, and boundary nodes are represented by BN1... BN7. If each link (the inter-domain link represented by a solid line in accompanying drawings) between two adjacent domains is normal, then the method which includes no inter-domain path computation mainly includes the following blocks.
   In block 701: the SN sends a PCReq to the PCE1 to calculate a cross-domain path from the SN to the DN;
   In block 702: the PCE1 calculates a first domain sequence AS1-AS2-AS3 according to a first topology, sets the first domain sequence in the IRO object of the PCReq (that is, IRO=AS1, AS2, AS3) and forwards the PCReq to the PCE2.
   In block 703: the PCE2 forwards the PCReq to the PCE3.
   In block 704: after receiving the PCReq, the PCE3 serving as the PCE of the rear domain carries out a path computation but fails as the link BN4-DN is unavailable.
   In block 705: the PCE3 initiates a PCRep, carries the link BN4-DN in the IRO object of the PCRep and sets the NO-PATH object included in the PCRep to indicate the failure of the path computation.
   In block 706: the PCE2 forwards the PCRep to the PCE1.
   In block 707: after receiving the PCRep, the PCE1 knows, according to the NO-PTH object, that the path computation of the downstream PCE is failed, abandons the path computation to be performed, obtains the failed link BN4-DN from the IRO of the PCRep and deletes the failed link BN4-DN from the first topology thereof to obtain a second topology.
   In block 708: the PCE1 determines, according to the second topology thereof, candidate domain sequences AS1-AS2'-AS3 and AS1-AS2'-AS3'-AS3, selects the shorter one AS1-AS2'-AS3 as a second domain sequence and initiates a path computation aiming at the candidate domain sequence AS1-AS2'-AS3.
   In block 709: the PCE1 sets the IRO included in the PCEeq to be AS1-AS2'-AS3, records the failed link BN4-DN in the XRO object of the PCReq and then sends the set PCReq to the PCE2'.
   In block 710: the PCE2' forwards the PCReq to the PCE3.
   In block 711: after receiving the PCReq, the PCE3 of the rear domain carries out a new path computation, determines the link BN4-DN as a failed link according to the XRO information included in the PCRep and then excludes the failed link to directly obtain a link BN7-DN.
   In block 712: the PCE3 records the VSPT3 (BN7-DN) in the PCRep and then forwards the PCRep to the PCE2'.
   In block 713: after receiving the PCRep, the PCE2' carries out a path computation to obtain a VSPT2' (BN5-BN6).
   In block 714: the PCE2' records the VSPT2' in the PCRep and forwards the PCRep to the PCE1.
   In block 715: the PCE1 completes the BRPC of the head domain to obtain a VSPT1 and finally determines a path from the SN to the DN according to the VSPT1, the VSPT2 and VSPT3.
   In block 716: the PCE1 sends the SN node a PCRep response (carrying the path from the SN to the DN).
III. There is a failed link in a head domain
   As shown in Fig. 8, there are four domains (a head domain AS1, intermediate domains AS2 and AS2' a rear domain AS3), the PCEs corresponding to the domains consist of a PCE1, a PCE2, a PCE2' and a PCE3 (not shown in accompanying drawings). A source node is represented by SN, a destination node is represented by DN, and boundary nodes are represented by BN1...BN7. If each link (the inter-domain link represented by a solid line in accompanying drawings) between two adjacent domains is normal, then the method which includes no inter-domain path computation mainly includes the following blocks.
   In block 801: the SN sends a PCReq to the PCE1 to calculate a cross-domain path from the SN to the DN.
   In block 802: the PCE1 calculates a first domain sequence AS1-AS2-AS3 according to a first topology, sets the IRO of the PCReq to be AS1, AS2 and AS3 and then forwards the PCReq to the PCE2.
   In block 803: the PCE2 forwards the PCReq to the PCE3.
   In block 804: after receiving the PCReq, the PCE3 serving as the PCE of the rear domain carries out a path computation to successfully obtain a VSPT3 (BN4-DN).
   In block 805: the PCE3 generates a PCRep, records the VSPT3 in the PCRep and then forwards the PCRep to the PCE2.
   In block 806: after receiving the PCRep sent from the PCE3, the PCE2 carries out a path computation to obtain a VSPT2 (BN2-BN3).
   In block 807: the PCE2 records the VSPT2 in the PCRep and forwards the PCRep carrying the VSPT2 and the VSPT3 to the PCE1.
   In block 808: after receiving the PCRep, the PCE1 carries out a path computation but fails as the link SN-BN1 is unavailable.
   In block 809: the PCE1 sends a PCNtf to the PCE2 to notify the PCE2 to release the resources occupied for computing the VSPT2.
   In block 810: the PCE2 releases the resources occupied for computing the VSPT2;
   In block 811: the PCE2 forwards the PCNtf to the PCE3 to notify the PCE3 to release the resources occupied for computing the VSPT3.
   In block 812: the PCE3 releases the resources occupied for computing the VSPT3.
   In block 813: the PCE1 deletes the link SN-BN1 from the first topology thereof to obtain a second topology, determines a second domain sequence AS1-AS2'-AS3 according to the second topology and then initiates a path computation aiming at the second domain sequence AS1-AS2'-AS3.
   In block 814: the PCE1 sets the IRO of the PCReq to be AS1-AS2'-AS3, records the link SN-BN1 in the XRO object of the PCReq and then sends the set PCReq to the PCE2'.
   In block 815: the PCE2' forwards the PCReq to the PCE3.
   In block 816: after receiving the PCReq, the PCE3 carries out a path computation again and still obtains the VSPT3 (BN4-DN).
   In block 817: the PCE3 generates a PCRep, records the VSPT3 in the PCRep and then forwards the PCRep carrying the VSPT3 to the PCE2'.
   In block 818: after receiving the PCRep, the PCE2' carries out a path computation to obtain a VSPT2' (BN5-BN6).
   In block 819: the PCE2' records the VSPT2' in the PCRep and returns the PCRep carrying the VSPT2' and the VSPT3 to the PCE1.
   In block 820: after receiving the PCRep, the PCE1 carries out a path computation to obtain a VSPT1 (SN-AS1).
   In block 821: the PCE1 obtains a path from the SN to the DN according to the VSPT1, the VSPT2' and the VSPT3.
IV. There is a failed link between two adjacent domains
   As shown in Fig. 9, there are four ASs (a head domain AS1, intermediate domains AS2 and AS2' a rear domain AS3), the PCEs corresponding to the domains consist of a PCE1, a PCE2, a PCE2' and a PCE3 (not shown in accompanying drawings). A source node is represented by SN, a destination node is represented by DN, and boundary nodes are represented by BN1...BN7. The links BN1-BN2, BN3-BN4, BN7-BN5 and BN6-BN4 are all inter-domain links (links between domains). In existing BRPC, an inter-domain link, for example, a link BN1-BN2, is generally calculated by an upstream PCE (that is, PCE1) and an inter-domain link BN3-BN4 is generally calculated by a PCE2. The specific path computation process is as follows:
   901: the SN sends a PCReq to the PCE1 to calculate a cross-domain path from the SN to the DN;
   902: the PCE1 calculates a first domain sequence AS1-AS2-AS3 according to a first topology, sets the IRO of the PCReq to be AS1, AS2 and AS3 and then forwards the PCReq to the PCE2;
   903: the PCE2 forwards the PCReq to the PCE3;
   904: after receiving the PCReq, the PCE3 of the rear domain carries out a path computation to obtain a VSPT3;
   905: the PCE3 sends to the PCE 2 the PRCep carrying the VSPT3;
   906: the PCE2 serving as the PCE of an intermediate domain attempts to carry out a path computation to obtain a VSPT2 but fails as the inter-domain link BN3-BN4 is unavailable;
   907: the PCE2 sends a PCNtf message to the PCE3 to notify the PCE3 to release all the resources occupied for computing the VSPT3 and sets the IRO of the PCRep to be BN3-BN4 and the NO-PATH object included in the PCRep to indicate the failure of the computation;
   908: the PCE2 sends the PCRep to the PCE1;
   909: after receiving the PCRep, the PCE1 knows, according to the NO-PTH object, that the path computation of the downstream PCE is failed, abandons the path computation to be performed, obtains the failed link BN3-BN4 according to the IRO object of the PCRep and deletes the failed link BN3-BN4 from the first topology to obtain a second topology;
   910: the PCE1 determines, according to the second topology thereof, a sole candidate domain sequence AS1-AS2'-AS3, selects the candidate domain sequence AS1-AS2'-AS3 as a second domain sequence and initiates a path computation aiming at the candidate domain sequence AS1-AS2'-AS3;
   911: the PCE1 sets the IRO of the PCReq to be AS1-AS2'-AS3, records the link BN3-BN4 in the XRO and then sends the set PCReq to the PCE2';
   912: the PCE2' forwards the PCReq to the PCE3;
   913: after receiving the PCReq, the PCE3 carries out a path computation and still obtains the BN4-DN;
   914: the PCE3 records the VSPT3 in the PCRep and then forwards the PCRep carrying the VSPT3 to the PCE2';
   915: after receiving the PCRep, the PCE2' carries out a path computation to obtain a VSPT2';
   916: the PCE2' records the VSPT2' in the PCRep and returns the PCRep carrying the VSPT2' and the VSPT3 to the PCE1;
   917: after receiving the PCRep, the PCE1 carries out a path computation to obtain a VSPT1; and
   918: the PCE1 determines a path from the SN to the DN according to the VSPT2' and the VSPT3 carried in the PCRep and the VSPT1 calculated by the PCE1.

It should be noted that in the foregoing embodiment, the failed link may be transmitted among PCEs by being carried in separately configured specific information but not necessarily transmitted by being carried in the PCRep or the PCEeq. Further, an upper limit may also be set on the basis of the foregoing embodiment to limit the times the PCE of the head domain re-initiates a path computation.

In conclusion, the foregoing embodiment has the following advantages:
1: as the PCRep and a PCReq already locate in existing BRPC, no extra information is needed for transmitting the failed link;
2: if the failed link locates in an intermediate domain, then a domain sequence excluding the intermediate domain is preferably selected as a second domain sequence, thus increasing the probability of success of the computation of a path according to the second domain sequence.

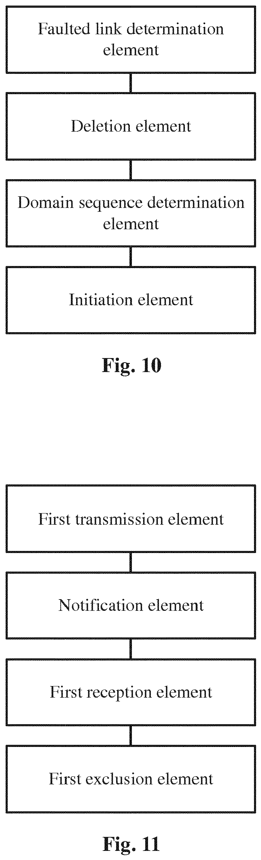

Further, as shown in Fig. 10, the disclosure also provides a PCE for a head domain, which includes:
a failed link determination element configured to determine all the failed links that lead to the failure of a path computation in a first domain sequence;
a deletion element configured to delete each failed link from a first topology to obtain a second topology;
a domain sequence determination element configured to determine a second domain sequence according to the second topology; and
an initiation element configured to initiate a path computation aiming at the second domain sequence.

After failing to compute the path according to the first domain sequence, the PCE of a head domain initiates a path computation according to a second domain sequence. As the second domain sequence is determined according to the second topology, the failed link can be avoided, thus guaranteeing the probability of success of the re-computation of a path.

Specifically, in the foregoing embodiment, the failed link includes:
a failed link of a downstream PCE or a failed link of the PCE of a head domain, wherein the failed link of the downstream PCE is obtained by being transmitted by the downstream PCE and that of the head domain is obtained by being computed by the PCE of the head domain.

In existing path computation field, each domain is equipped with a corresponding PCE. The process of a successful multi-domain path computation is substantially as follows: the PCE of a rear domain computes a path first, after successfully computing the path that the PCE of the rear domain is responsible for, the PCE of the rear domain sends a path computation response to an adjacent upstream PCE, and after receiving the path computation response, the adjacent upstream PCE computes a path the adjacent upstream PCE is responsible for, so on and so forth, until the PCE of the head domain successfully computes the path. A PCE failing to compute a path notifies an upstream PCE of the result of the path computation through a path computation response so that the upstream PCE abandons a path computation task to be performed, thus, in the embodiment, the failed link is either from the PCE of the head domain or from the downstream PCE. The failed link of the downstream PCE is provided by the downstream PCE and that of the head domain is directly computed by the PCE of the head domain.

Specifically, in the foregoing embodiment, the domain sequence determination element includes:
a first determination sub-element configured to determine, according to the second topology, available candidate domain sequences between a source node and a destination node;
a second determination sub-element configured to determine a position where the failed link locates;
a first selection sub-element configured to exclude, if the failed link locates in an intermediate domain, a domain sequence including the intermediate domain from the candidate domain sequences and then select the shortest one of the rest candidate domain sequences as the second domain sequence; to directly select the shortest one of the candidate domain sequences as the second domain sequence if each candidate domain sequence is a domain sequence including the intermediate domain; and
a second selection sub-element configured to select the shortest one of the candidate domain sequences as the second domain sequence if the failed link locates in the head domain, a rear domain or between two adjacent domains.

Generally, the source node may be connected with the destination node through a plurality of candidate domain sequences. If the failed link is in the intermediate domain, due to inherent unstable factors of the intermediate domain which may be highly likely to cause a new failed link in the next path computation, the one of the candidate domain sequences which can avoid the intermediate domain is preferably selected as the second domain sequence to increase the probability of success of the next path computation; if the intermediate domain is unavoidable, then the shortest one of the candidate domain sequences is directly selected as the second domain sequence to guarantee the efficiency of the next path computation. As the head domain in which the source node locates and the rear domain in which the destination node locates are irreplaceable in a domain sequence, the shortest one of the candidate domain sequences is directly selected as the second domain sequence. Moreover, if the failed link is between two adjacent domains, as there may be other available inter-domain links between the two adjacent domains, a second topology is generated by avoiding the failed link, and the shortest one of the candidate domain sequences avoiding the failed link is directly selected as the second domain sequence.

Additionally, to support certain subsequent functions, the resources occupied for the path computation are not released by the current PCE immediately after the path is successfully computed by the current PCE. It can be known from the above that in a case where the PCE of the head domain fails to compute a path, the computation of a path from the source node to the destination node is meaningless even if each downstream PCE successfully computes a path that the downstream PCE is responsible for, to avoid the waste of resources by a downstream PCE, in the foregoing embodiment, the PCE for a head domain further includes:
a first notification element configured to transmit, if the PCE of the head domain fails to compute a path according to the first domain sequence, a first notification message to a downstream PCE according to the first domain sequence to notify the downstream PCE receiving the notification message to release the resources occupied for path computation.

In addition, although the second domain sequence can successfully avoid the failed link appearing in the first domain sequence, a downstream PCE may still waste resources in computing the failed link when computing a path according to the second domain sequence, thus, the initiation element is specifically configured to:
send a path computation request to the downstream PCE according to the second domain sequence to request for the computation of a path according to the second domain sequence, wherein the failed link is contained in the path computation request so that the downstream PCE may exclude each failed link according to the path computation request when implementing a path computation according to the second domain sequence.

Further, as shown in Fig. 11, the disclosure also provides a PCE for an intermediate domain, which includes:
a first transmission element configured to transmit, if the computation of a path according to a first domain sequence is failed, a failed link leading to the computation failure to the PCE of a head domain according to the first domain sequence.

In this way, the PCE of the head domain deletes the failed link appearing in an intermediate domain from a first topology to obtain a second topology, determines a second domain sequence according to the second topology and finally initiates a path computation aiming at the second domain sequence.

Additionally, to support certain subsequent functions, the resources occupied for the path computation are not released by the current PCE immediately after the path is successfully computed. It can be known from the above that in a case where the PCE of an intermediate domain fails to compute a path, the computation of a path from the source node to the destination node is meaningless even if each downstream PCE successfully computes a path that the downstream PCE is responsible for, to avoid the waste of resources by a downstream PCE, as shown in Fig. 11, the PCE for an intermediate domain further includes:
a notification element configured to transmit, if the PCE of the head domain fails to compute a path according to the first domain sequence, a first notification message to a downstream PCE according to the first domain sequence to notify the downstream PCE receiving the notification message to release the resources occupied for path computation.

Further, to avoid the repeated computation of the failed link during the computation of the path according to the second domain sequence, as shown in Fig. 11, the PCE for an intermediate domain may further include:
a first reception element configured to receive a path computation request sent from the PCE of the head domain aiming at a second domain sequence, wherein the failed link is contained in the path computation request; and
a first exclusion element configured to exclude the failed link contained in the path computation request when a path is computed according to the second domain sequence.

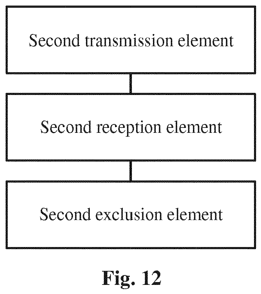

Further, as shown in Fig. 12, the disclosure also provides a PCE for a rear domain, which includes:
a second transmission element configured to transmit, if the PCE of the rear domain fails to calculate a path according to a first domain sequence, a failed link leading to the computation failure to an upstream PCE according to the first domain sequence.

In this way, the PCE of a head domain deletes the failed link appearing in the rear domain from a first topology to obtain a second topology, determines a second domain sequence according to the second topology and finally initiates a path computation aiming at the second domain sequence.

Further, to avoid the repeated computation of the failed link during the computation of a path according to the second domain sequence, as shown in Fig. 12, the PCE for a rear domain may further include:
a second reception element configured to receive a path computation request sent from the PCE of the head domain aiming at a second domain sequence, wherein the failed link is contained in the path computation request; and
a second exclusion element configured to exclude the failed link contained in the path computation request when a path is computed according to the second domain sequence.

Apparently, the PCE of the head domain, the PCE of an intermediate domain and the PCE of a rear domain, which are embodiments of a device corresponding to the method disclosed herein for processing a multi-path computation failure, can achieve the same technical effect with the method disclosed herein.

### Industrial Applicability

According to the solution disclosed herein, when a PCE determines a path from a source node to a destination node according to a first domain sequence, if there is a link leading to the failure of the computation, then the link leading to the failure of the computation is deleted from the topology of the PCE of a head domain to obtain a second topology, then a second domain sequence is generated according to the second topology and a path computation is carried out according to the second domain sequence, thereby determining a final path from a source node to a destination node.

Although certain preferred embodiments of the disclosure have been illustrated herein, it should be appreciated that a variety of modifications and improvements can be devised by those of ordinary skill in the art without departing from the modifications and improvements shall fall within the protection scope of the disclosure which is defined by the appended claims.

## Claims

1. A method for processing a failure of a multi-domain path computation, which is applied to a Path Computation Element, PCE, of a head domain, said method comprising the steps of:
sending a path computation request, wherein a failed link is contained in the path computation request; and receiving a path computation response corresponding to the path computation request from a downstream PCE;
acquiring the failed link leading to a failure to compute, according to a first domain sequence, a path, the path computation request being used for requesting to compute, according to a second domain sequence, the path;
deleting the failed link from a first topology to obtain a second topology;
determining a second domain sequence according to the second topology; and
computing a path according to the second domain sequence.

2. The method for processing the failure of the multi-domain path computation according to claim 1, **characterized in that** the failed link is a failed link of the downstream PCE or a failed link of the head domain, wherein
the failed link of the downstream PCE is obtained by being transmitted by the downstream PCE and the failed link of the head domain is obtained by being computed by the PCE of the head domain.

3. The method for processing the failure of the multi-domain path computation according to claim 1, **characterized in that** determining the second domain sequence according to the second topology comprises:
determining, according to the second topology, available candidate domain sequences from a source node to a destination node;
determining a position where the failed link locates;
based on that the failed link locates in an intermediate domain, excluding a domain sequence including the intermediate domain where the failed link locates from the candidate domain sequences and then selecting the shortest one of the rest candidate domain sequences as the second domain sequence; directly selecting the shortest one of the candidate domain sequences as the second domain sequence based on that each of the candidate domain sequences is a domain sequence including the intermediate domain; or
selecting the shortest one of the candidate domain sequences as the second domain sequence based on that the failed link locates in the head domain or a rear domain or between two adjacent domains.

4. The method for processing the failure of the multi-domain path computation according to claim 1, **characterized by** further comprising:
based on that the PCE of the head domain fails to calculate the path according to the first domain sequence, transmitting a first notification message to the downstream PCE according to the first domain sequence to notify the downstream PCE receiving the notification message to release resources occupied for path computation.

5. The method for processing the failure of the multi-domain path computation according to claim 1, **characterized in that** computing the path according to the second domain sequence comprises:
sending, according to the second domain sequence, a path computation request, which is used for requesting to compute a path according to the second domain sequence, to the downstream PCE, wherein the failed link is contained in the path computation request to enable the downstream PCE to exclude the failed link according to the path computation request when the downstream PCE calculates the path for the second domain sequence.

6. A Path Computation Element, PCE, of a head domain, said path computation element comprising:
a failed link determination element configured to determine each failed link leading to a failure to compute, according to a first domain sequence, a path;
a deletion element configured to delete the each failed link from a first topology to obtain a second topology;
a domain sequence determination element configured to determine a second domain sequence according to the second topology; and
an initiation element configured to initiate a path computation for the second domain sequence;
wherein before the failed link determination element determines the failed link leading to the failure to compute, the PCE of the head domain is further configured to send a path computation request, which is used for requesting to compute, according a second domain sequence, the path, wherein the failed link is contained in the path computation request; and receive a path computation response corresponding to the path computation request from a downstream PCE.

7. The PCE of the head domain according to claim 6, **characterized in that** the failed link comprises:
a failed link of a downstream PCE or a failed link of the PCE of the head domain, wherein the failed link of the downstream PCE is obtained by being transmitted by the downstream PCE and the failed link of the head domain is obtained by being computed by the PCE of the head domain; and/or
the initiation element is specifically configured to: send a path computation request, which is used for requesting to compute a path according to the second domain sequence, to the downstream PCE according to the second domain sequence, wherein the failed link is contained in the path computation request to enable the downstream PCE to exclude each failed link according to the path computation request when a path is computed according to the second domain sequence.

8. The PCE of the head domain according to claim 6, **characterized in that** the domain sequence determination element comprises:
a first determination sub-element configured to determine, according to the second topology, available candidate domain sequences from a source node to a destination node;
a second determination sub-element configured to determine a position where the failed link locates;
a first selection sub-element configured to
based on the failed link locates in an intermediate domain, exclude a domain sequence including the intermediate domain where the failed link locates from the candidate domain sequences and then select the shortest one of the rest candidate domain sequences as the second domain sequence;
based on that each candidate domain sequence is a domain sequence including the intermediate domain where the failed link locates, directly select the shortest one of the candidate domain sequences as the second domain sequence; and
a second selection sub-element configured to select the shortest one of the candidate domain sequences as the second domain sequence based on that the failed link locates in the head domain, a rear domain or between two adjacent domains.

## Patentansprüche

1. Verfahren zur Verarbeitung eines Multidomain-Pfadberechnungsfehlers, das auf ein Pfadberechnungselement (Path Computation Element, PCE) einer Hauptdomäne angewendet wird, wobei das Verfahren die Schritte umfasst:
Senden einer Pfadberechnungsanforderung, wobei eine fehlerhafte Verbindung in der Pfadberechnungsanforderung enthalten ist; und Empfangen einer der Pfadberechnungsanforderung entsprechenden Pfadberechnungsantwort von einem nachgeordneten PCE;
Erfassen der fehlerhaften Verbindung, die zu einem Fehler bei der Berechnung eines Pfades gemäß einer ersten Domänenabfolge führt, wobei die Pfadberechnungsanforderung verwendet wird, um den Pfad gemäß einer zweiten Domänenabfolge zu berechnen;
Löschen der fehlerhaften Verbindung aus einer ersten Topologie, um eine zweite Topologie zu erhalten;
Ermitteln einer zweiten Domänenabfolge gemäß der zweiten Topologie; und
Berechnen eines Pfades gemäß der zweiten Domänenabfolge.

2. Verfahren zur Verarbeitung eines Multidomain-Pfadberechnungsfehlers nach Anspruch 1, **dadurch gekennzeichnet, dass** die fehlerhafte Verbindung eine fehlerhafte Verbindung des nachgeordneten PCE oder eine fehlerhafte Verbindung der Hauptdomäne ist, wobei
die fehlerhafte Verbindung des nachgeordneten PCE durch Übertragen durch das nachgeordnete PCE erhalten wird und die fehlerhafte Verbindung der Hauptdomäne durch Berechnen durch das PCE der Hauptdomäne erhalten wird.

3. Verfahren zur Verarbeitung eines Multidomain-Pfadberechnungsfehlers nach Anspruch 1, **dadurch gekennzeichnet, dass** das Ermitteln der zweiten Domänenabfolge gemäß der zweiten Topologie umfasst:
gemäß der zweiten Topologie Ermitteln verfügbarer Kandidatendomänenabfolgen von einem Quellknoten zu einem Zielknoten;
Ermitteln einer Position, an der sich die fehlerhafte Verbindung befindet;
auf der Grundlage dessen, dass sich die fehlerhafte Verbindung in einer Zwischendomäne befindet, Ausschließen einer Domänenabfolge einschließlich der Zwischendomäne, in der sich die fehlerhafte Verbindung befindet, aus den Kandidatendomänenabfolgen und anschließend Auswählen der kürzesten der verbleibenden Kandidatendomänenabfolgen als zweite Domänenabfolge; direktes Auswählen der kürzesten der Kandidatendomänenabfolgen als zweite Domänenabfolge auf der Grundlage dessen, dass jede der Kandidatendomänenabfolgen eine Domänenabfolge ist, die die Zwischendomäne beinhaltet; oder
Auswählen der kürzesten der Kandidatendomänenabfolgen als zweite Domänenabfolge auf der Grundlage dessen, dass sich die fehlerhafte Verbindung in der Hauptdomäne oder in einer hinteren Domäne oder zwischen zwei benachbarten Domänen befindet.

4. Verfahren zur Verarbeitung eines Multidomain-Pfadberechnungsfehlers nach Anspruch 1, **dadurch gekennzeichnet, dass** es ferner umfasst:
auf der Grundlage dessen, dass das Berechnen des Pfades gemäß der ersten Domänenabfolge durch das PCE der Hauptdomäne fehlschlägt, Übertragen einer ersten Benachrichtigungsmitteilung an das nachgeordnete PCE gemäß der ersten Domänenabfolge, um das nachgeordnete PCE zu benachrichtigen, das die Benachrichtigungsnachricht empfängt, zur Pfadberechnung belegte Ressourcen freizugeben.

5. Verfahren zur Verarbeitung eines Multidomain-Pfadberechnungsfehlers nach Anspruch 1, **dadurch gekennzeichnet, dass** das Berechnen des Pfades gemäß der zweiten Topologie umfasst:
Senden einer Pfadberechnungsanforderung gemäß der zweiten Domänenabfolge, die zum Anfordern der Berechnung eines Pfads gemäß der zweiten Domänenabfolge verwendet wird, an das nachgeordnete PCE, wobei die fehlerhafte Verbindung in der Pfadberechnungsanforderung enthalten ist, um dem nachgeordneten PCE zu ermöglichen, die fehlerhafte Verbindung gemäß der Pfadberechnungsanforderung auszuschließen, wenn das nachgeordnete PCE den Pfad für die zweite Domänenabfolge berechnet.

6. Pfadberechnungselement (PCE) einer Hauptdomäne, wobei das Pfadberechnungselement umfasst:
ein Ermittlungselement für fehlerhafte Verbindungen, das konfiguriert ist, um jede fehlerhafte Verbindung zu ermitteln, die zu einem Fehler bei der Berechnung eines Pfades gemäß einer ersten Domänenabfolge führt;
ein Löschelement, das konfiguriert ist, um jede fehlerhafte Verbindung aus einer ersten Topologie zu löschen, um eine zweite Topologie zu erhalten;
ein Domänenabfolge-Ermittlungselement, das konfiguriert ist, um eine zweite Domänenabfolge gemäß der zweiten Topologie zu ermitteln; und
ein Auslösungselement, das konfiguriert ist, um eine Pfadberechnung für die zweite Domänenabfolge zu auszulösen;
wobei das PCE der Hauptdomäne ferner konfiguriert ist, um eine Pfadberechnungsanforderung zu senden, die zum Anfordern der Berechnung des Pfades gemäß einer zweiten Domänenabfolge verwendet wird, bevor das Ermittlungselement für fehlerhafte Verbindungen die fehlgeschlagene Verbindung ermittelt, die zu einem Fehler bei der Berechnung führt, wobei die fehlerhafte Verbindung in der Pfadberechnungsanforderung enthalten ist; und Empfangen einer der Pfadberechnungsanforderung entsprechenden Pfadberechnungsantwort von einem nachgeordneten PCE.

7. PCE der Hauptdomäne nach Anspruch 6, **dadurch gekennzeichnet, dass** die fehlerhafte Verbindung umfasst:
eine fehlerhafte Verbindung eines nachgeordneten PCE oder eine fehlerhafte Verbindung des PCE der Hauptdomäne, wobei die fehlerhafte Verbindung des nachgeordneten PCE durch Übertragen durch das nachgeordnete PCE erhalten wird und die fehlerhafte Verbindung der Hauptdomäne durch Berechnen durch das PCE der Hauptdomäne erhalten wird; und/oder
das Auslösungselement insbesondere konfiguriert ist, um: gemäß der zweiten Domänenabfolge eine Pfadberechnungsanforderung, die zum Anfordern des Berechnens eines Pfads gemäß der zweiten Domänenabfolge verwendet wird, an die nachgeordnete PCE zu senden, wobei die fehlerhafte Verbindung in der Pfadberechnungsanforderung enthalten ist, um dem nachgeordneten PCE zu ermöglichen, jede fehlerhafte Verbindung gemäß der Pfadberechnungsanforderung auszuschließen, wenn ein Pfad gemäß der zweiten Domänenabfolge berechnet wird.

8. PCE der Hauptdomäne nach Anspruch 6, **dadurch gekennzeichnet, dass** das Domänenabfolge-Ermittlungselement umfasst:
ein erstes Ermittlungsteilelement, das konfiguriert ist, um gemäß der zweiten Topologie verfügbare Kandidatendomänenabfolgen von einem Quellknoten zu einem Zielknoten zu ermitteln;
ein zweites Ermittlungsteilelement, das konfiguriert ist, um eine Position zu ermitteln, an der sich die fehlerhafte Verbindung befindet;
ein erstes Auswahlteilelement, das konfiguriert, um
auf der Grundlage dessen, dass sich die fehlerhafte Verbindung in einer Zwischendomäne befindet, eine Domänenabfolge einschließlich der Zwischendomäne aus der Kandidatendomänenabfolge auszuschließen, in der sich die fehlerhafte Verbindung befindet, und anschließend die kürzeste der verbleibenden Kandidatendomainabfolgen als zweite Domänenabfolge auszuwählen;
auf der Grundlage dessen, dass jede Kandidatendomänenabfolge eine Domänenabfolge ist, die die Zwischendomäne beinhaltet, in der sich die fehlerhafte Verbindung befindet, die kürzeste der Kandidatendomänenabfolgen direkt als zweite Domänenabfolge auszuwählen; und
ein zweites Auswahlteilelement, das konfiguriert ist, um auf der Grundlage dessen, dass sich die fehlerhafte Verbindung in der Hauptdomäne, in einer hinteren Domäne oder zwischen zwei benachbarten Domänen befindet, die kürzeste der Kandidatendomänenabfolgen als zweite Domänenabfolge auszuwählen.

## Revendications

1. Procédé de traitement d'une défaillance d'un calcul de chemin multi-domaine, qui est appliqué à un élément de calcul de chemin, PCE, d'un domaine tête, ledit procédé comprenant les étapes consistant à :
envoyer une demande de calcul de chemin, une liaison défaillante étant contenue dans la demande de calcul de chemin ; et recevoir une réponse de calcul de chemin correspondant à la demande de calcul de chemin provenant d'un PCE aval ;
acquérir la liaison défaillante conduisant à un échec de calcul d'un chemin selon une première séquence de domaines, la demande de calcul de chemin servant à demander de calculer le chemin selon une seconde séquence de domaines ;
supprimer la liaison défaillante d'une première topologie pour obtenir une seconde topologie ;
déterminer une seconde séquence de domaines en fonction de la seconde topologie ; et
calculer un chemin en fonction de la seconde séquence de domaines.

2. Procédé de traitement de l'échec du calcul de chemin multi-domaine selon la revendication 1, **caractérisé en ce que** la liaison défaillante est une liaison défaillante du PCE aval ou une liaison défaillante du domaine tête,
la liaison défaillante du PCE aval s'obtenant par transmission par le PCE aval et la liaison défaillante du domaine tête s'obtenant par calcul par le PCE du domaine tête.

3. Procédé de traitement de l'échec du calcul de chemin multi-domaine selon la revendication 1, **caractérisé en ce que** la détermination de la seconde séquence de domaines selon la seconde topologie consistant à :
déterminer, selon la seconde topologie, des séquences de domaines candidates disponibles d'un noeud source à un noeud de destination;
déterminer une position où est localisée la liaison défaillante ;
si la liaison défaillante est située dans un domaine intermédiaire, exclure une séquence de domaine comprenant le domaine intermédiaire où est située la liaison défaillante à partir des séquences de domaines candidates, puis sélectionner la plus courte des séquences de domaines candidates restantes en tant que seconde séquence de domaines ; sélectionner directement la séquence la plus courte parmi les séquences de domaines candidates en tant que seconde séquence de domaines si chacune des séquences de domaines candidates est une séquence de domaines incluant le domaine intermédiaire; ou
sélectionner la plus courte des séquences de domaines candidates en tant que seconde séquence de domaines si la liaison défaillante est située dans le domaine tête ou dans un domaine arrière ou entre deux domaines adjacents.

4. Procédé de traitement de l'échec du calcul de chemin multi-domaine selon la revendication 1, **caractérisé en ce qu'**il consiste en outre :
si le PCE du domaine tête ne parvient pas à calculer le chemin conformément à la première séquence de domaines, transmettre un premier message de notification au PCE aval selon la première séquence de domaines pour informer le PCE aval recevant le message de notification de libérer les ressources occupées pour le calcul de chemin.

5. Procédé de traitement de l'échec du calcul de chemin multi-domaine selon la revendication 1, **caractérisé en ce que** le calcul du chemin selon la seconde séquence de domaines consiste à :
envoyer, en fonction de la seconde séquence de domaines, une demande de calcul de chemin, qui sert à demander de calculer un chemin selon la seconde séquence de domaines, au PCE aval, la liaison défaillante étant contenue dans la demande de calcul de chemin permettant d'activer le PCE aval pour exclure la liaison défaillante en fonction de la demande de calcul de chemin lorsque le PCE aval calcule le chemin pour la seconde séquence de domaines.

6. Élément de calcul de chemin, PCE, d'un domaine tête, ledit élément de calcul de chemin comprenant :
un élément de détermination de liaison défaillante, configuré pour déterminer chaque liaison défaillante conduisant à une défaillance de calcul d'un chemin selon une première séquence de domaines ;
un élément de suppression, configuré pour supprimer chaque liaison défaillante d'une première topologie afin d'obtenir une seconde topologie ;
un élément de détermination de séquence de domaines, configuré pour déterminer une seconde séquence de domaines en fonction de la seconde topologie ; et
un élément de lancement, configuré pour lancer un calcul de chemin pour la seconde séquence de domaines ;
avant que l'élément de détermination de liaison défaillante ne détermine la liaison défaillante conduisant à l'échec du calcul, le PCE du domaine tête étant en outre configuré pour envoyer une demande de calcul de chemin, qui sert à demander de calculer le chemin selon une seconde séquence de domaines, la liaison défaillante étant contenue dans la demande de calcul de chemin ; et pour recevoir une réponse de calcul de chemin correspondant à la demande de calcul de chemin provenant d'un PCE aval.

7. PCE du domaine tête selon la revendication 6, **caractérisé en ce que** la liaison défaillante comprend :
une liaison défaillante d'un PCE aval ou une liaison défaillante du PCE du domaine tête, la liaison défaillante du PCE aval s'obtenant par transmission, par le PCE aval et la liaison défaillante du domaine tête s'obtenant par calcul par le PCE du domaine tête ; et/ou
l'élément de lancement étant plus particulièrement configuré pour : envoyer une demande de calcul de chemin, qui sert à demander de calculer un chemin selon la seconde séquence de domaines, au PCE aval selon la seconde séquence de domaines, la liaison défaillante étant contenue dans le chemin demande de calcul pour permettre au PCE aval d'exclure chaque liaison défaillante conformément à la demande de calcul de chemin lorsqu'un chemin est calculé selon la seconde séquence de domaines.

8. PCE du domaine tête selon la revendication 6, **caractérisé en ce que** l'élément de détermination de séquence de domaines comprend :
un premier sous-élément de détermination, configuré pour déterminer, en fonction de la seconde topologie, les séquences de domaines candidates disponibles d'un noeud source à un noeud de destination ;
un second sous-élément de détermination, configuré pour déterminer une position dans laquelle se trouve la liaison défaillante ;
un premier sous-élément de sélection, configuré pour
si la liaison défaillante est située dans un domaine intermédiaire, exclure une séquence de domaines comprenant le domaine intermédiaire où est située la liaison défaillante à partir des séquences de domaines candidates, puis sélectionner la séquence la plus courte parmi les séquences de domaines candidates restantes en tant que seconde séquence de domaines ;
si chaque séquence de domaines candidate est une séquence de domaines comprenant le domaine intermédiaire où est située la liaison défaillante, sélectionner directement la séquence la plus courte parmi les séquences de domaines candidates en tant que seconde séquence de domaines ; et
un second sous-élément de sélection, configuré pour sélectionner la séquence la plus courte parmi les séquences de domaines candidates en tant que seconde séquence de domaines si la liaison défaillante est située dans le domaine tête, dans un domaine arrière ou entre deux domaines adjacents.
